# EUROPEAN PATENT SPECIFICATION

(11) **EP 4 011 786 B1**
(45) Date of publication and mention of the grant of the patent: **11.06.2025**
(21) Application number: 21213562.8
(22) Date of filing: 09.12.2021
(51) Int. Cl.: B64F 5/60, B64C 11/30

(54) **TEST RIG AND METHOD FOR BLADE PITCH MEASUREMENT SYSTEM**
PRÜFSTAND UND VERFAHREN ZUR MESSUNG DER BLATTSTEIGUNG
BANC D'ESSAI ET PROCÉDÉ POUR SYSTÈME DE MESURE DE PAS DE PALE

(30) Priority: 11.12.2020 US 202017119163; 18.12.2020 US 202017126135
(43) Date of publication of application: 15.06.2022
(73) Proprietor: PRATT & WHITNEY CANADA CORP., Longueuil, Québec J4G 1A1 (CA)
(72) Inventor: FARRELL, Ian, (01BE5) Longueuil, J4G 1A1 (CA); YAKOBOV, Ella, (01BE5) Longueuil, J4G 1A1 (CA); FETT, Steve, (01BE5) Longueuil, J4G 1A1 (CA); MAROTTE, Josee, (01BE5) Longueuil, J4G 1A1 (CA)
(74) Representative: Dehns

(56) References cited:
- CN-A- 110 186 370

## Description

### TECHNICAL FIELD

The disclosure relates generally to sensor accuracy and, more particularly, to testing sensors used in a propeller blade angle position feedback system.

### BACKGROUND OF THE ART

On variable pitch propeller systems, such as those often associated to turboprop engines, it can be desirable to accurately measure the propeller blade angle, especially in the low pitch range of blade angles, often referred to as the beta (β) region. This can be done to ensure that the blade angle is controlled according to the engine power setpoint requested, such as in reverse and low pitch situations. Accurate measurement of the blade angle can also ensure that the propeller is not inadvertently commanded to transition into low or reverse beta angles.

Some variable pitch propeller systems use a measurement system which includes a sensor positioned on the stator and a feedback device which can be referred to as a ring, positioned on the rotor. The feedback ring can have position markers in the form of protrusions detected by the sensor when they come into circumferential alignment with it. Information such as blade angle can be derived from signal received from the sensor. Examples of such systems are presented in US Patent 10 822 105 and US Patent Publication 2020/0017234 for example.

While such measurement systems can be useful to a certain degree, there can be a challenge in ensuring that they achieve a required degree of accuracy in some embodiments. Indeed, while it was known to test engines on test beds for testing some systems of the engines for certification before flight, these techniques are often limited in terms of engine or propeller operating conditions which they can replicate, and may not be suitable to simulate some operating conditions which can be expected during flight. There thus remained room for improvement.

A prior art test rig for testing a blade pitch measurement system having the features of the preamble of claim 1 is disclosed in CN 110186370 A.

### SUMMARY

In one aspect, there is provided a test rig for testing a blade pitch measurement system of a variable pitch propeller system, in accordance with claim 1.

The mechanism may be configured for moving the second mount relative to the frame.

The test rig may further comprise a rotation sensor (or speed sensor) configured to generate a signal indicative of a rotation speed of the ring mount.

The mechanism may include an axial traverse including an axial guide, an axial motor mechanically coupled to move the second mount along the axial guide, and an axial sensor configured to generate a signal indicative of the relative displacement between the second mount and the axial guide or of relative position of the second mount along the axial guide.

The mechanism may include a radial traverse including a radial guide, a radial motor mechanically coupled to move the second mount along the radial guide, and a radial sensor configured to generate a signal indicative of the relative displacement between the second mount and the axial guide or of relative position of the second mount along the axial guide.

The controller may be further configured to perform a testing routine including controlling the rotation speed and position of the second mount trough a sequence of values associated to corresponding test conditions, and further configured to hold test data in a computer readable memory accessible to a processor of the controller, said test data associating each test condition to a corresponding rotation speed value and to a corresponding second mount position value, said testing routine being based on the test data.

The controller may be further configured to hold comparison data in a computer readable memory accessible to the processor of the controller, said comparison data including a range of permitted values for the second mount position value associated with each test condition, further configured for receiving a measured second mount position value based on a signal generated by the pitch sensor during a corresponding one of the test conditions, to compare the measured second mount position value to the range of permitted values and to generate a signal indicative of rejection if the measured second mount position value exceeds the range of permitted values.

In another aspect, there is provided a method of operating a test rig for testing a blade pitch measurement system of a variable pitch propeller system, in accordance with claim 8.

The method may further comprise measuring a rotation speed of the feedback device using a rotation sensor (or speed sensor).

The method may further comprise measuring a position of the second mount along the orientation parallel to the rotation axis using an axial sensor.

The method may further comprise measuring a position of the second mount along the orientation radial to the rotation axis using a radial sensor.

The method may further comprise, using a computer, reading instructions indicating a sequence of test conditions each including a rotation speed and a position of the second mount, controlling the test rig in accordance with the sequence of test conditions, and for each test condition, receiving a corresponding signal from the pitch sensor.

The method may further comprise, for each test condition, deriving a position of the second mount from the corresponding signal received from the pitch sensor.

The method may further comprise, for each test condition, comparing the derived position of the second mount to a range of permissible values associated to the instructions, and generating a signal indicative of whether or not the derived position is within the range of permissible values.

The method may further comprise, for each test condition, deriving a rotation speed of the first mount from the corresponding signal received from the pitch sensor.

The method may further comprise, for each test condition, comparing the derived rotation speed to a range of permissible values associated to the instructions, and generating a signal indicative of whether or not the derived position is within the range of permissible values.

The method may further comprise moving the pitch sensor via the second mount from an initial radial position to a subsequent radial position along an orientation radial to the rotation axis (i.e., along a direction radial to the rotation axis) and repeating the controlling of the test rig in accordance with the sequence of test conditions in the subsequent radial position.

### DESCRIPTION OF THE DRAWINGS

Reference is now made to the accompanying figures in which:
Fig. 1 is a schematic cross sectional view of a gas turbine engine;
Fig. 2A is an enlarged cross sectional view of the propeller of the gas turbine engine of Fig. 1, having a measurement system;
Fig. 2B is an example of a test rig for testing accuracy of the measurement system of Fig. 2A;
Fig. 3A is an elevation view of a first step of an example axial traverse calibration procedure;
Fig. 3B is an oblique view of a second step of an example axial traverse calibration procedure;
Figs. 4A-4D are flowcharts of example methods for testing sensor accuracy;
Fig. 5 is a block diagram of an example computing device; and
Fig. 6 is a cross-sectional view of another example of a test rig.

### DETAILED DESCRIPTION

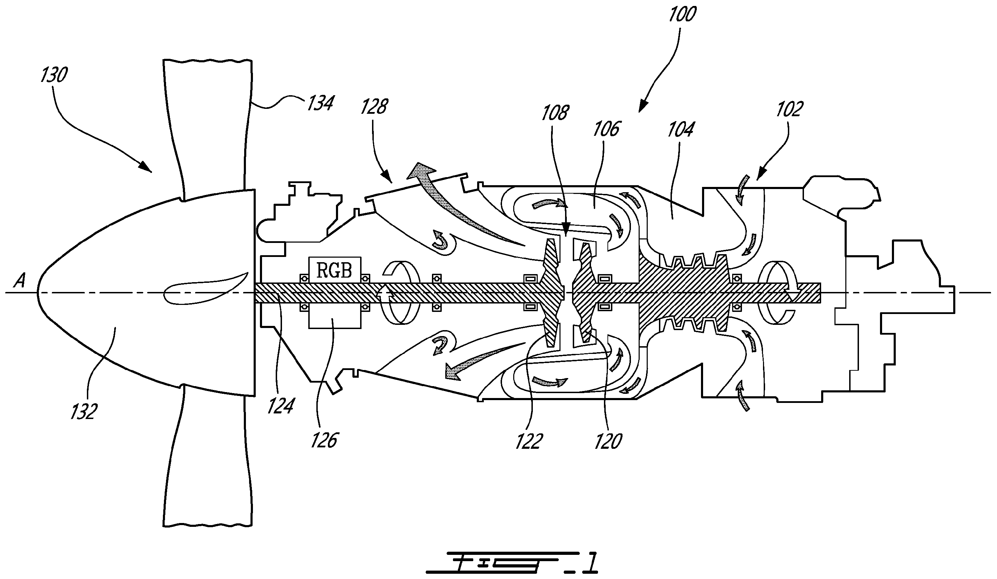

Fig. 1 illustrates a gas turbine engine 100, of a type typically provided for use in subsonic flight, comprising an inlet 102, through which ambient air is propelled, a compressor section 104 for pressurizing the air, a combustor 106 in which the compressed air is mixed with fuel and ignited for generating an annular stream of hot combustion gases, and a turbine section 108 for extracting energy from the combustion gases. The turbine section 108 illustratively comprises a compressor turbine 120, which drives the compressor assembly and accessories, and at least one power or free turbine 122, which is independent from the compressor turbine 120 and rotatingly drives a rotor shaft 124 about a propeller shaft axis A through a reduction gearbox 126. Hot gases may then be evacuated through exhaust stubs 128. A rotor 130, in the form of a propeller through which ambient air is propelled, is hosted in a propeller hub 132. Rotor 130 may, for example, correspond to a propeller of a fixed-wing aircraft or a main (or tail) rotor of a rotary-wing aircraft such as a helicopter. The rotor 130 may comprise a plurality of circumferentially-arranged blades 134 connected to the hub 132 by any suitable means and extending radially therefrom. Turboshaft engines can have some similarities in operation to turboprop engines.

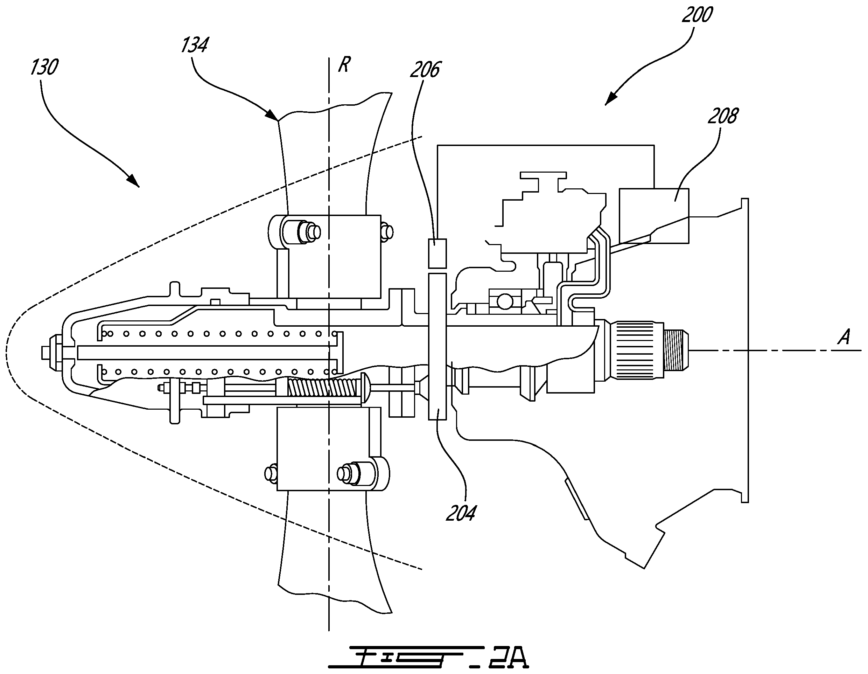

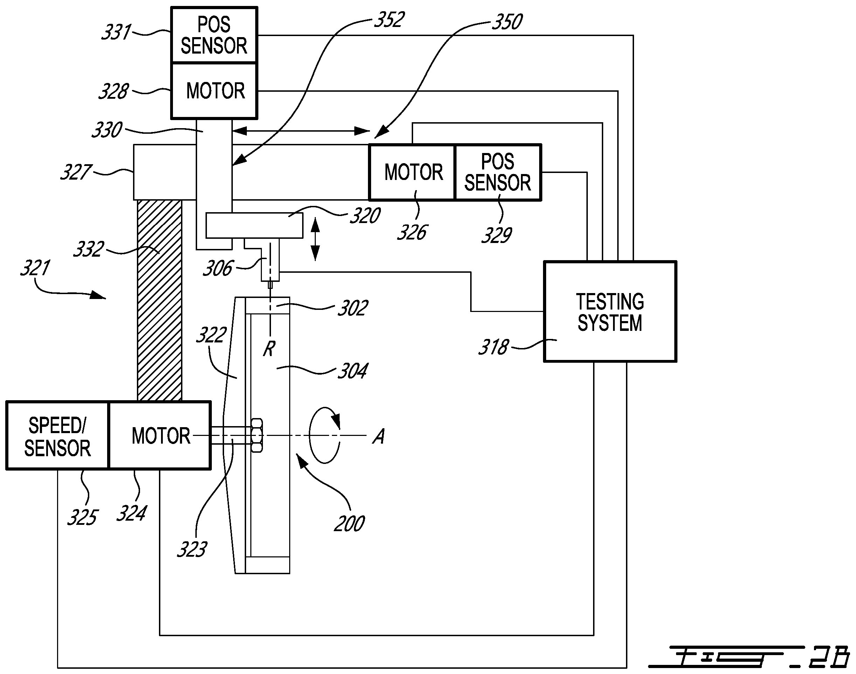

As depicted in Fig. 2, the plurality of circumferentially interspaced blades 134 are each rotatable about a radially-extending axis R through a range of adjustable blade angles, the blade angle being the angle between the chord line (i.e. a line drawn between the leading and trailing edges of the blade) of the propeller blade section and a plane perpendicular to the axis of propeller rotation. A horizontally extending blade has a low pitch if its chord is oriented close to vertical, and high pitch if its chord is oriented close to horizontal (also known as the "feathered" position). A measurement system 200 provides blade pitch (or beta) angle position feedback during rotation of the propeller 130.

Generally, the measurement system 200 includes a feedback device in the formof a ring 204 having a plurality of position markers that rotate with the ring 204 about axis A. The measurement system 200 also includes a pitch sensor 206 designed to detect the position markers of the ring. The measurement system 200 can also include any suitable electronics to receive and process the signal, and may be associated to a computer which acts in actively controlling the pitch of the blades based on various inputs such as user inputs and algorithms. The electronics and any associated circuitry can be referred to asa controller 208. The controller 208 can form part of a broader aircraft computer or be a standalone device designed to communicate with the aircraft computer, for instance. During operation of the propeller 130, the sensor 206 can be held on the engine casing, and the propeller 130 and the ring 204 can thus rotate relative to the sensor 206. This can be practical in some embodiments due to the fact that it can help avoid having to mount any sensitive equipment on the propeller and avoid means of communication which would be required to communicate from a rotating sensor to non-rotating controller 208. The sensor 206 can be received on an engine sensor mount forming part or otherwise secured to the engine casing, whereas the ring can be received on an engine ring mount forming part or otherwise mounted in a manner to rotate with the propeller. The feedback device mount can alternately be referred to as the first mount, and the sensor mount can alternatively be referred to as the second mount for convenience.

In an embodiment such as presented in US Patent 10 822 105 and US Patent Publication 2020/0017234 for example, the markers can be provided in the form of protrusions in the ring. The sensor 206 may be a variable reluctance sensor, a capacitive sensor, a hall effect sensor, and the like, and detect passage of the position markers and generates a sensor signal indicative of the passage of the position markers. While being mounted in a manner to rotate together with the propeller, the ring 204 can be configured for axial displacement relative to the other components of the components, and this axial displacement can occur based on a change in the pitch angle of the blades when the blades are in the beta region, for instance. The position markers can include two position markers having different slopes relative to the axial orientation in a corresponding circumferential plane, and the axial position of the ring can be derived from the distance measured between the two position markers using the sensor 206 and controller 208.

While Fig. 2A shows a configuration with the sensor 206 being radially external tothe ring 204, alternate embodiments can have a sensor which is radially internal to the ring and oriented radially outwardly, for example.

In some embodiments, there may be some significant tolerance in the ultimate radial or axial spacing between the ring 204 and the sensor 206 on the engine, based on the manufacturing tolerances of the respective mounts, and of any other component therebetween due to tolerance stacking. Accordingly, in addition to compliance with their own individual manufacturing tolerances, the certification process may additionally require that the ring and/or the sensor operate suitably independently of whether they are installed on an engine having a zero, or a perfect relative position between the sensor mount and the ring mount, or on an engine having one or two "worst case scenarios" corresponding to the greatest possible deviations from the perfect position which could be allowed within manufacturing tolerances. In some cases, the sensor and/or ring can be designed to accommodate a radial and/or axial deviation by trimming upon installation on the engine, but this may not be possible for every case, and any possible deviation not accommodated by trimming on assembly may need to be taken into account in the simulations performed in the context of the certification process.

Accordingly, while such measurement systems can be useful to a certain degree, there can be a challenge in ensuring that they achieve a required degree of accuracy in some embodiments, before approving their use for flight. Indeed, while one avenue is to test engines on test beds for testing some systems of the engines, this may not feasibly allow to replicate the conditions associated with the entire engine operating envelope to be tested.

It was found that this challenge can be satisfactorily addressed at least in some embodiments by using a test rig to validate the accuracy of the measurement system. There are, however, several challenges which may need to be addressed to be able to achieve this. For example, an embodiment of a measurement system such as presented in US Patent Publication 2020/0017234 can measure blade pitch based on the relative axial position between the ring and the probe, the relative axial position changing based on blade pitch in the beta region. Accordingly, for testing such a measurement system, to be able to simulate changes in blade pitch, one needs the test rig to allow for changes in relative axial position between the ring and the probe in addition to allowing an adjustable rotation speed of the ring, both of which may need to be achievable within a relatively high degree of accuracy. For instance, the required degree of precision/accuracy in the determination of the relative axial position to allow determining the blade pitch with a sufficient degree of precision, can be very high, such as in the order of 0.001" (0.0254 mm), and there can be some challenges in achieving an arrangement which allows to reach the required degree of precision while also allowing for the required relative movements between the components.

Moreover, in an embodiment wherein there can exist a significant tolerance in the relative radial positions between the ring mount and the sensor mount on the engine, the test rig may further be required to allow testing for different possible values of relative radial positions between the ring and the sensor within this tolerance, in addition for allowing the relative axial movement and the rotation of the ring.

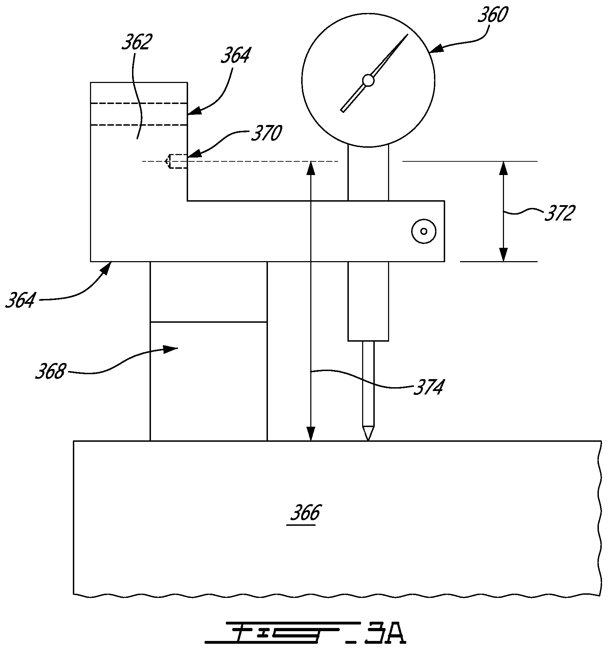

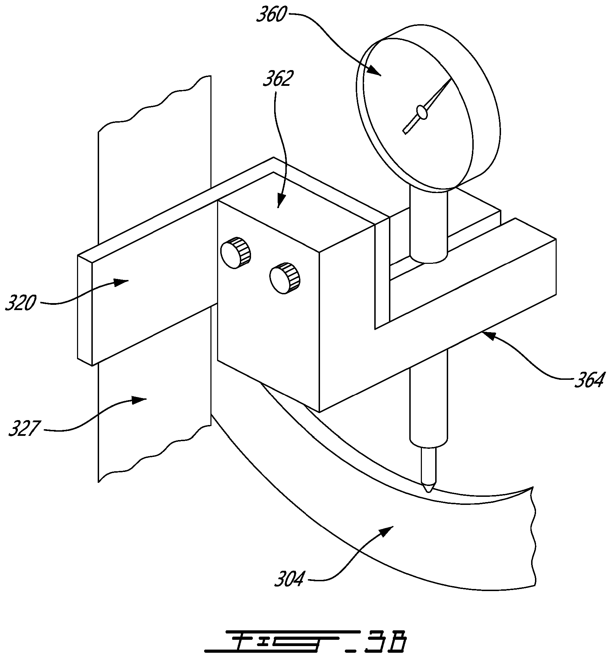

It was found that such challenges could be overcome at least in some embodiments using a test rig 321 such as presented in Fig. 3. Indeed, it was found that such a test rig could be used to determine whether a sensor 206, 306, a ring 204, 304, or one or more other components of the measuring system 200 could be certified for flight, and/or otherwise certified to be within acceptable manufacturing tolerances. Suchtests can be performed separately from the engine 100, and the propeller 130 onto which the components are to be ultimately assembled. As such, the components used for testing are the sensor 206, 306, the ring 204, 304, and a testing system 318. The testingsystem can incorporate additional components of the measuring system 200 such as oneor more parts of the controller 208, for instance. With reference to Fig. 3, the sensor 306and ring 304 are mounted to corresponding mounts 322, 320. The testing system 318 is operatively coupled to allow receiving and processing the sensor's signal, and comparing values derived from the sensor's signal to expected values based on calibration, for one or more test conditions. The test conditions can include various ring 304 rotation speeds in one or more relative radial positions between the sensor 306 and the ring 304, and/or in one or more various relative axial positions between the sensor 306 and the ring 304, to name some examples. Various features can be included into the test rig in order to allow conveniently achieving such test conditions, for instance.

For instance, the ring mount 322 can be precisely mechanically connected to a shaft 323 associated to a rotation motor 324, and the sensor mount 320 can be precisely mechanically connected to the housing or other non-rotating part of the motor 324. The degree of precision implied will depend on the ultimate application and can be achieved by the person skilled in the art. The motor 324 provides for the rotation of the ring 304,via the ring mount 322 and shaft 323, relative to the sensor 306. In some embodiments, it can be useful to use some form of speed sensor to provide relatively precise rotation speed information to the testing system. The speed sensor 325 can form part of the motor itself, or be incorporated into the motor controller for instance, and the motor controller can be included as part of or separately from the testing system 318. The speed sensor 325 can provide an signal which is to be acquired by the testing system and converted into data for performing the comparisons, for instance. The testing system can have other data in the form of expected flight values and tolerance data, for instance, to which it compares the data obtained from the testing in the test rig to validate or reject one or more measurement system component. Rotation speed data can be included as part of the expected flight values and tolerance data, for instance, to form a basis for the comparisons.

The test rig 321 has an axial traverse 350. The axial traverse 350 is part of, or the entirety of, a mechanism used to move the sensor 306 axially relative to the ring 304, or perhaps more accurately to move the sensor mount 320 axially relative to the ring mount 322. The axial traverse 350 can include an axial motor 326. Preferably, the axial traverse 350 can further include an axial sensor 329 which can be used to provide precise information about the relative axial position or displacement in or between the various testing conditions. The position sensor 329 can form part of the motor itself, or be incorporated into the motor controller for instance, and the motor controller can be included as part of or separately from the testing system. The axial sensor 329 can provide a signal which is to be acquired by the testing system 318 and converted into data for performing the comparisons, for instance. Corresponding axial position data can be included as part of the expected flight values and tolerance data, for instance, to form a basis for the comparisons.

The test rig 321 further has a radial traverse 352. The radial traverse 352 is a mechanism used to move the sensor 306 radially relative to the ring 304, or perhaps more accurately to move the sensor mount 320 radially relative to the ring mount 322. The radial traverse 352 can include a radial motor 328. Preferably, the radial traverse 352 can further include a radial sensor 331 which can be used to provide precise information about the relative radial position or displacement in or between the various testing conditions. The position sensor can form part of the motor itself, or be incorporated into the motor controller for instance, and the motor controller can be included as part of or separately from the testing system. The sensor 331 can provide a signal which is to be acquired by the testing system 318 and converted into data for performing the comparisons, for instance. Corresponding radial position data can be included as part of the expected flight values and tolerance data, for instance, to form a basis for the comparisons.

The testing system 318 the testing system can include a software package configured for controlling the operation of the test rig. The test rig controlling elements can include software stored in a computer readable medium and executable by the computer to control the motors, in a manner which can be based on the feedback provided by corresponding sensors, to simulate various testing conditions. The testing conditions can include different rotation speeds, different relative axial positions, and/or different relative radial positions, for instance. Accordingly, the testing system can incorporate a controller is configured to perform a testing routine including controlling the rotation speed and position of the second mount trough a sequence of values associated to corresponding test conditions, and to hold test data in a computer readable memory accessible to a processor of the controller. The test data can associate each test condition to a corresponding rotation speed value and to a corresponding second mount position value. The testing routine can be based on the test data. The testing system can, using a computer, read instructions indicating a sequence of test conditions each including a rotation speed and a position of the second mount, control the test rig in accordance with the sequence of test conditions, and for each test condition, receive a corresponding signal from the pitch sensor. Data pertaining to the testing conditions can be associated to the data derived from the sensor signal.

Indeed, the testing system can further include a software package identical or comparable to the software package which will form part of the engine's measurement system 200, in association with the functionality of reading and processing the sensor's signal, and deriving therefrom a rotation speed of the ring and/or an axial position of the sensor relative the ring. This latter software package can be included in the form of computer readable instructions stored in a non-transitory computer readable medium accessible to a processor forming part of the testing system, for instance. Accordingly, for each test condition of the sequence, a position of the second mount can be derived from the corresponding signal received from the pitch sensor.

The testing system can further include a software package configured for making comparisons between the data derived from the sensor in corresponding testing conditions and a range of values considered acceptable in those testing conditions. This latter software package can be included in the form of computer readable instructions stored in a non-transitory computer readable medium accessible to a processor forming part of the testing system, for instance. In an alternate embodiment, the data obtained from the testing system can be transferred to another computer which has the latter software package and which is configured to perform such comparisons, for instance, or the comparison can be made by a human inspector using an user interface. For instance, a speed as provided by the speed sensor in a given test condition can have a first value, and the speed derived from the sensor signal can have a second value. A tolerance can be associated to the first value, in a manner that if the second value is within the tolerance, the sensor is accepted, whereas if the second value exceeds the tolerance, the sensor can be rejected. Similarly, a first value of relative axial position can be established from an initial calibration, and/or from precisely known displacement from the initial calibration such as may be achieved via sensor 329. A second value of relative axial position can be derived from the sensor signal in given test conditions. A tolerance can be associated to the first value, in a manner that if the second value is within the tolerance, the sensor is accepted, whereas if the second value exceeds the tolerance, the sensor can be rejected. Different testing conditions can be simulated by adjusting one or more of the rotation speed, the relative axial position, and the relative radial position, for instance. For each test condition, a rotation speed of the first mount can be derived from the corresponding signal received from the pitch sensor.

Indeed, the controller can further be configured to hold comparison data in a computer readable memory accessible to the processor of the controller. The comparison data can include a range of permitted values for the second mount position value associated with each test condition. It can be configured for receiving a measured second mount position value based on a signal generated by the pitch sensor during a corresponding one of the test conditions, to compare the measured second mount position value to the range of permitted values and to generate a signal indicative of rejection if the measured second mount position value exceeds the range of permitted values. For each test condition, the controller can comparing the derived position of the second mount to a range of permissible values associated to the instructions, and generating a signal indicative of whether or not the derived position is within the range of permissible values. For each test condition, the controller can compare the derived rotation speed to a range of permissible values associated to the instructions, and generating a signal indicative of whether or not the derived position is within the range of permissible values.

The sensor can be moved via the second mount from an initial radial position to a subsequent radial position along an orientation radial to the rotation axis, and the controlling of the test rig in accordance with the sequence of test conditions can be repeated in the subsequent radial position, potentially for a plurality of radial positions.

The ring 304 can be rotated at a known speed using motor 324. In some embodiments, the motor 324 is a servo motor, which can be an AC or DC servo motor. The motor 324 should be capable of performing the maximum propeller acceleration/deceleration rates recorded on an actual engine, such as engine 100. A speed command may be provided to the motor 324 from the testing system 318 or from a separate device for controlling speed of the ring 304. A motor speed sensor 325 may be mechanically coupled to motor 324 and communicatively coupled to the testing system 318. The sensor used for the motor speed sensor 325 may be a rotary encoder (magnetic or optical), resolver, variable reluctance probe, etc.

In some embodiments, the motor 326, 328 of the axial traverse and/or of the radial traverse can be a stepper motor or a servo motor, and can be controlled by the testing system 318. A step rate or velocity command and direction can be sent from the testing system 318 to the motors 326, 328 in order to position the sensor 306 at a desired location. Corresponding position sensors 328, 329 may be mechanically coupled to the motor 326, 328 or between holder 320 and frame portion 332, and communicatively coupled to the testing system 318. The axial traverse and/or radial traverse sensor 329, 331, can be of a rotary type if coupled to the motor 326, 328 itself, and may be a rotary encoder (magnetic or optical), resolver, variable reluctance probe, and the like. The axial traverse and/or radial traverse sensor 329, 331, can be of a linear type if coupled between the holder 320 and the frame portion 332 and may be a magnetic or optical linear encoder, a Linear Variable Differential Transformer (LVDT), a laser displacement probe, a mechanical micrometer or depth gauge, and the like.

The position of the sensor holder relative to the ring holder can be precisely determined using calibration. The sensor and the ring can then be precisely set into the corresponding holders. The sensor reading can then provide its own indication of the axial position of the ring relative to the sensor. If the sensor reading deviates from the calibration in excess of a certain threshold value, the sensor can be rejected. If the sensor reading deviates from the calibration by a value which remains within a tolerance, the sensor can be approved, or further testing can be conducted, for instance. An offset corresponding to the deviation can then be applied to the sensor reading in order to correct the sensor reading to the calibrated value for all further tests to be conducted, for instance. The axial traverse can then be used to change the axial position of the sensor relative to the ring and the readings from the sensor can be compared to expected values based on the axial traverse position information obtained from the test rig, in various simulated flight scenarios, to determine whether the readings taken at the other axial positions are correct (within allowed tolerances) or not.

In some embodiments, there may be some tolerance in the ultimate radial or axial position between the ring and the sensor on the engine. This tolerance can extend from zero, or a perfect relative position between the sensor and the ring, to one or two "worst case scenarios" corresponding to the greatest possible deviations from the perfect position which could be allowed within manufacturing tolerances. The testing performed using the test rig may be specifically intended to simulate the best and worst case scenarios. To this end, the radial traverse of the test rig can be used to change the relative radial position between the sensor and the ring between a simulated perfect radial position (or perfect air gap), and a simulated worst case position (e.g. a maximum possible air gap), for instance. Similarly, and if relevant, the axial traverse can be used to perform similar testing for simulating possible variations in the axial position due to an eventual axial manufacturing tolerance on the engine.

In some embodiments, it can be preferred for the speed of the motor used to rotate the ring mount to be controllable to within an accuracy of within +/- 1 RPM, preferably within +/- 0.5 RPM, and to reach acceleration speeds of at least 600 RPM/sec,and max speeds of at least 2500 RPM, for instance. Alternately, it can be considered suitable in some embodiments for the measurement of the rotation speed achieved by the rotation speed sensor to be of within +/- 1 RPM, preferably within +/- 0.5 RPM, for instance. In some embodiments, it can be preferred for the axial traverse motor to be configured for achieving a satisfactory slew rate representive of engine operation, such as of a slew rate of 0.5 in/sec (0.0127 m/s) in velocity for an acceleration of 8 in/sec² (0.2032 m/s²) for instance, andit can be preferred for the axial traverse position sensor to have an accuracy indetermining the axial displacement from an initial position better than 0.002" (0.0508 mm), preferably better than 0.001" (0.0254 mm), for instance.

In one embodiment, each one of the axial traverse 350 and the radial traverse 352can include a corresponding guide or rail 327, 330, a motor 326, 328 generating a movement of the sensor mount 320 relative to the corresponding guide or rail 327, 330, and a position sensor 329, 331 providing a signal indicative of the movement or position of the sensor mount 320 relative to or along the guide or rail 327, 330. In one embodiment, the axial guide 327 is fixed relative to the frame 332, and the radial guide 330 is moved by the axial motor 326 along the axial guide 327. In embodiments without a radial traverse, the axial traverse forms a mechanism configured to move the sensor mount relative to the ring mount along an orientation parallel to the rotation axis A. In embodiments with aradial traverse, the axial traverse forms a mechanism configured to move the sensor mount relative to the ring mount along an orientation parallel to the rotation axis A, and the mechanism is further configured to move the sensor mount radially relative to the rotation axis. Other mechanisms than an axial traverse can be used to provide comparable movability, such as industrial robots, in other embodiments. In alternate embodiments, the axial traverse can be configured to be moved radially by the radial traverse and the radial guide can be fixed relative to the frame.

An initial relative axial position between the ring mount and the sensor mount can be achieved within a very high degree of accuracy using a calibration procedure. In one example, the calibration procedure can use a precise measurement instrument, such as a 0.0001" (0.00254 mm) dial indicator gauge 360 securely held in a fixture 362 having one nor more reference surfaces 364. A first step represented in Fig. 3A can include zeroing the dial indicator gauge 360 to a known distance between a reference surface 364 and a sensing tip of the dial indicator. This can be achieved by separating the reference surface 364 from a granite table or precision cast iron plate 366 by a known distance using gauge blocks 368. The fixture 362 can have a locating feature 370 such as a reference pin slot spaced from the reference surface 364 by a precisely known distance 372. The locatingfeature 370 can then be known to be precisely spaced from the zero position of the dial indicator gauge 360 by distance 374, precisely known to be the sum of distance 372 andthe height of the gauge block stack 368.

In a second step, the fixture 362 can be precisely positioned in the sensor mount320 using the locating feature 370. It can then be moved along the axial guide 327 until reaching the zero of the dial indicator gauge 360 in reference to a desired reference feature such as a receiving surface of the ring mount, or an axial edge of the ring 304, for instance, at which point the axial traverse position sensor 329 can be zeroed, and the fixture 362 can be replaced by the sensor 306 using the same locating feature of the mount 320 for precision. If present, the radial traverse can be zeroed using a similar technique.

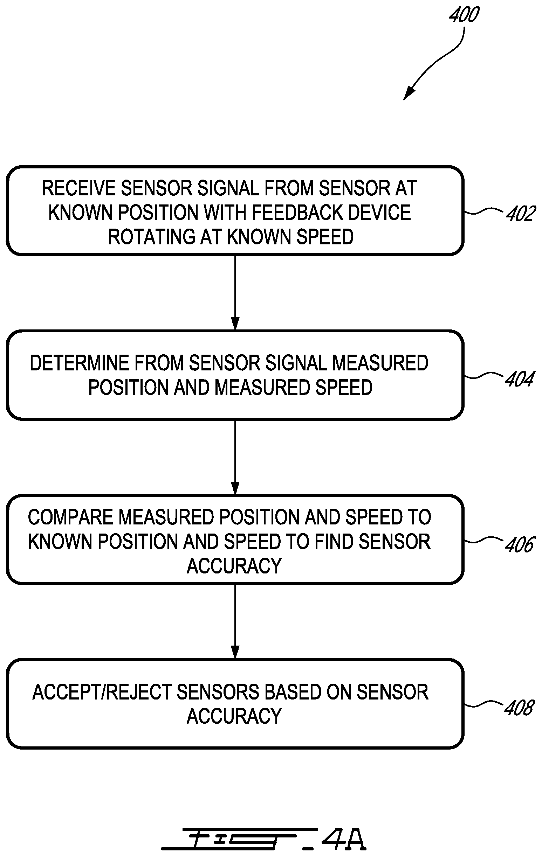

The testing system 318 can be configured for testing the sensor in accordance with a method 400 as illustrated in Fig. 4A. At step 402, a sensor signal is received from the sensor 306 while the sensor 306 is positioned relative to the ring 304 at a known position, and the ring 304 is rotating at a known speed. In some embodiments, the testing system 318 sends control signals to one or more motors, such as motors 324, 326, 328 to cause the ring 304 to rotate at the known speed and to cause the sensor 306 to be placed at the known position. Alternatively, these settings are provided independently from the testing system 318.

The sensor 306 may be a variable reluctance sensor that detects the change in presence or proximity of the position markers 302 and outputs a semi-sinusoidal signal in response. The amplitude of the signal is highest when the position markers 306 are closest to the sensor 306 and lowest when the position markers 306 are furthest from the sensor 306. The sensor may be a passive sensor or an active sensor. For a passive sensor, the semi-sinusoidal signal is processed by the testing system 318 in order to get a waveform that can be more readily counted and timed. For example, a zero-crossing detector circuit may be used to generate a square pulse train from the semi-sinusoidal signal. Any design for a zero-crossing detector may be used.

At step 404, a measured position and a measured speed are determined from the received sensor signal. The measured position may be an axial position, a radial (air gap) position, or a combination thereof. For example, the time period between edge transitions of the square pulse train may be measured and used to calculate the relative position (parallel to axis A in Fig. 3B) between the ring 304 and the sensor 306 and to determine the rotational speed of the ring 304. These calculated values become the measured position and measured speed, respectively. It will be understood that through step 404, the testing system 318 emulates the detection unit 308 used to determine the position and speed of the ring 304 as the propeller 130 rotates while in operation. In some embodiments, the measured position and measured speed are determined from the sensor signal as per the teachings of U.S. Patent No. 10,435,140. Alternatively, other methods for determining the measured position and measured speed may be used.

At step 406, the measured position and speed are compared to the known position and speed to determine sensor accuracy, and may also be used to evaluate the accuracy of the position markers 302 or the detection unit 308 for investigation purposes. The differences between measured and known values may be compared to thresholds corresponding to acceptable accuracy deviations. At step 408, the sensor 306 is accepted or rejected based on the sensor accuracy. In other words, if the difference between the measured and known values exceeds the threshold, the sensor is rejected. If the difference between the measured and known values does not exceeded the threshold, the sensor is accepted. Different thresholds may be used for position and speed, in accordance with the specifications of the application. In some embodiments, a sensor 306 having only one out of two acceptable accuracies is rejected. More than two test points may also be used.

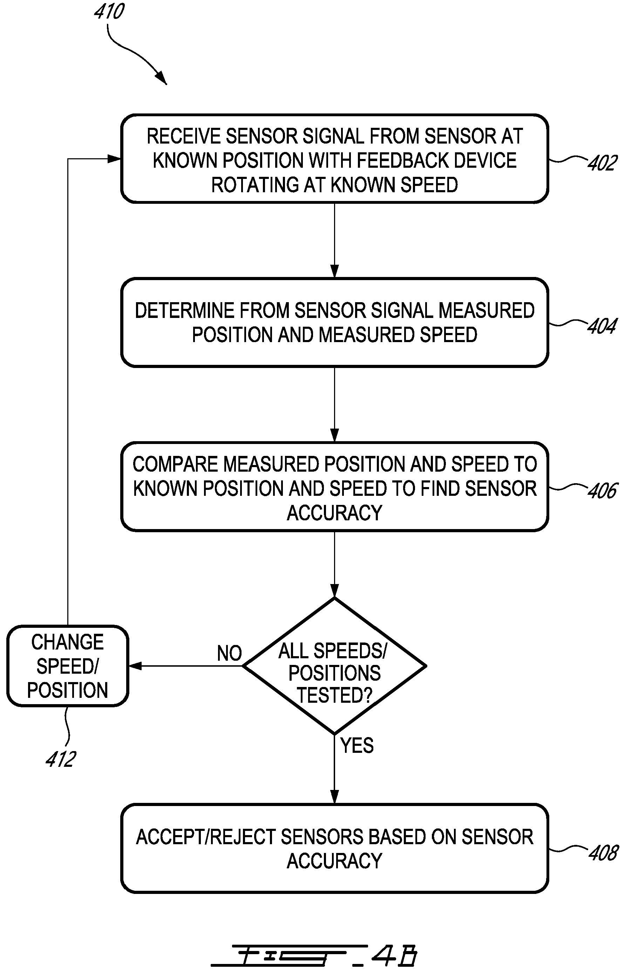

In some embodiments, the method 400 is repeated at a plurality of rotational speeds and relative positions between the sensor 306 and the ring 304. An example method 410 is illustrated in Fig. 4B. At step 412, a change in speed and/or position is effected by changing the settings of the test mount 321, for example through control of the motors 324, 326.

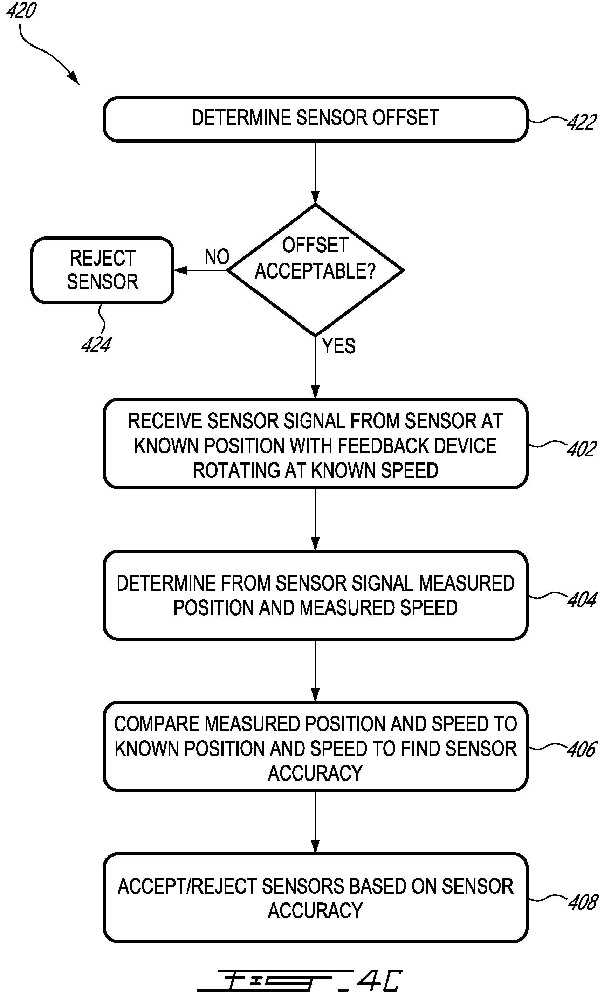

In some embodiments, the measured position of the sensor 306 relative to the ring 304 may include an offset that takes into account a tolerance of a pole piece of the sensor 306 and/or tolerance stack up of the testing system 318. Indeed, if the tolerance of the pole piece of the sensor is greater than the system level accuracy requirements, an offset is added to each measured position by the test system 318 to remove (or reduce) the effect caused by the discrepancy in tolerances. The offset may be input directly into the testing system 318 through a user interface. Alternatively, the testing system 318 may determine the offset. In some embodiments, the method 400 includes a step of determining the sensor offset, as shown in the example of Fig. 4C. The offset is determined at step 422 at the outset of method 420. In some embodiments, the offset is determined by positioning the sensor 306 at an offset determining position and setting the ring speed to an offset determining speed. The axial center of the ring 304 may be used as the offset determining position, due to the typically smaller magnetically induced axial position error at that point, but other positions may also be used. The offset determining speed is selected as a low speed at which a speed induced error may be eliminated. The offset is calculated by finding a difference between a measured position of the sensor 306 relative to the ring 304 and the offset determining position. This value may be added to all subsequent measured values, as found at step 404.

In some embodiments, the offset is also used to accept/reject the sensor 306, through a comparison with an offset threshold. If the offset is greater than the offset threshold, the sensor 306 is rejected at step 424. If the offset is within the bounds of the offset threshold, then the sensor 306 is accepted and the method 420 continues onto subsequent steps to determine sensor accuracy.

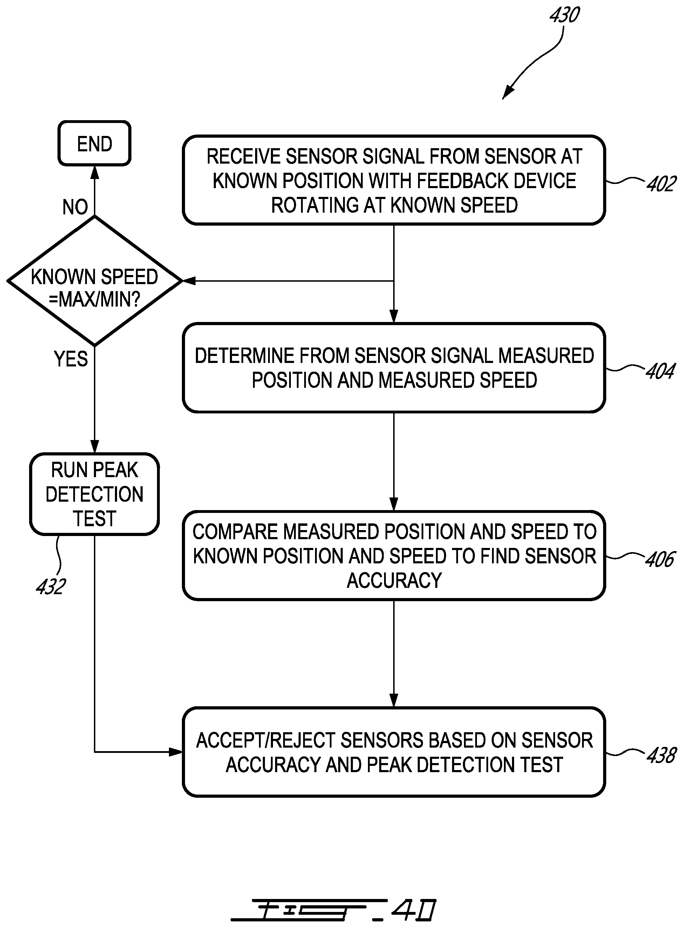

In some embodiments, one or more additional tests are run concurrently with the sensor accuracy test. An example is illustrated in Fig. 4D, where a peak voltage output detection test is performed at step 432 of method 430 concurrently with the sensor accuracy test. The peak detection test measures the minimum and maximum voltage magnitudes of the sensor 306 for each of the position markers 302, when the ring 304 is rotating at minimum and maximum speeds. This test may be triggered upon receipt of a sensor signal at step 402, when the known speed is the maximum or minimum speed. Alternatively, the test may be triggered from the measured speed, as determined at step 404.

Generally, the peak detection test selects and records the smallest positive and negative magnitudes of voltage over a complete ring revolution when the ring 304 is rotating at the minimum speed, and selects and records the largest magnitudes of voltage over a complete ring revolution when the ring 304 is rotating at the maximum speed. These values may be compared to minimum and maximum thresholds to ensure that the sensor 306 outputs a minimum voltage for all position markers 302 and that the maximum voltage does not exceed a maximum output voltage for optimal system accuracy. In the example illustrated, the outcome of the peak detection test is used to accept/reject the sensor at step 438 jointly with the sensor accuracy as determined at step 406. Alternatively, separate steps of accepting/rejecting the sensor are used, one based only on sensor accuracy and one based only on peak detection.

In another example of a test performed concurrently to the sensor accuracy test, a shorted coil test may be performed. When the sensor 306 is a dual coil design (each wound concentrically around the same pole piece), if one coil is shorted it will affect the axial positional reading accuracy of the other coil. The shorted coil test consecutively shorts each of the coils and simultaneously measures the positional reading accuracy of the un-shorted coil to ensure the accuracy shift is not beyond an acceptable value.

Although the methods 410, 420, 430 each show different features of method 400 independently, it will be understood that various combinations may be used, such that two or more of the features shown in methods 410, 420, 430 may be performed concurrently in a single embodiment.

In some embodiments, the testing system 318 is configured to perform the various tests on the sensor in a fully automated manner, for example through the use of automated test scripts. The testing system 318 may comprise a user interface through which an Acceptance Test Procedure (ATP) may be configured, whereby tests, speeds, positions, and other system settings are selected by an operator. Once the ATP is configured and started, the testing system 318 can control the position of the sensor 306 through the motor 326, the rotation of the ring 304 through the motor 324, and read the input sensor signal to perform the various tests.

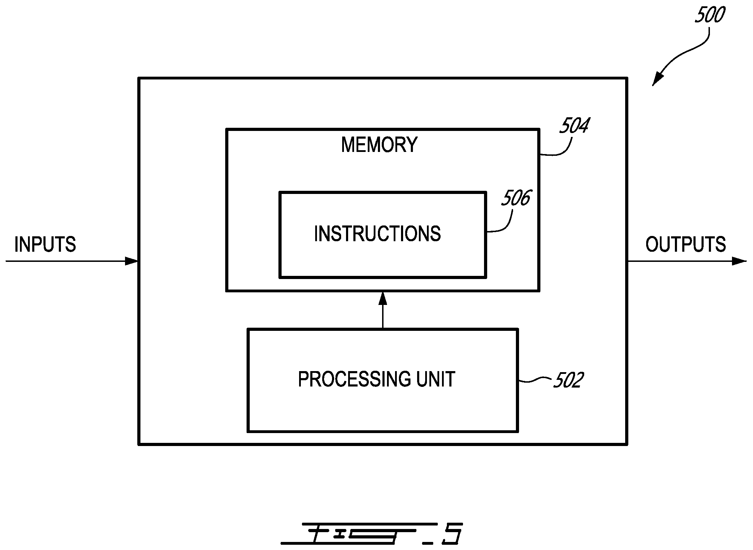

With reference to FIG. 5, there is illustrated an embodiment of a computing device 500 for implementing part or all of the testing system 318 described above. The computing device 500 can be used to perform part or all of the functions of the test system 318. In some embodiments, the testing system 318 is composed only of the computing device 500. In some embodiments, the computing device 500 emulates the detection unit308, as found in an engine controller of an engine 100 and forms a subset of the testingsystem 318. Although only one computing device 500 is illustrated, more than one computing device 500 may be used to implement the features of the testing system 318.

The computing device 500 comprises a processing unit 502 and a memory 504 which has stored therein computer-executable instructions 506. The processing unit 502 may comprise any suitable devices configured to implement the methods 400, 410, 420, 430 such that instructions 506, when executed by the computing device 500 or other programmable apparatus, may cause the functions/acts/steps performed as part of the methods 400, 410, 420, 430 as described herein to be executed. The processing unit 502 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 504 may comprise any suitable known or other machine-readable storage medium. The memory 504 may comprise non-transitory computer readable storage medium, for example, but not limited to, an electronic, magnetic, optical, electromagnetic, infrared, or semiconductor system, apparatus, or device, or any suitable combination of the foregoing. The memory 504 may include a suitable combination of any type of computer memory that is located either internally or externally to device, for example random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. Memory 504 may comprise any storage means (e.g., devices) suitable for retrievably storing machine-readable instructions 506 executable by processing unit 502.

The methods and systems for testing a sensor of a propeller blade angle position feedback system described herein may be implemented in a high level procedural or object oriented programming or scripting language, or a combination thereof, to communicate with or assist in the operation of a computer system, for example the computing device 500. Alternatively, the methods and systems for testing a sensor of a propeller blade angle position feedback system may be implemented in assembly or machine language. The language may be a compiled or interpreted language. Program code for implementing the methods and systems for testing a sensor of a propeller blade angle position feedback system may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems for testing a sensor of a propeller blade angle position feedback system may also be considered to be implemented by way of a non-transitory computer-readable storage medium having a computer program stored thereon. The computer program may comprise computer-readable instructions which cause a computer, or more specifically the processing unit 502 of the computing device 500, to operate in a specific and predefined manner to perform the functions described herein, for example those described in the methods 400, 410, 420, 430.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

The term "connected" or "coupled to" may include both direct coupling (in which two elements that are coupled to each other contact each other) and indirect coupling (in which at least one additional element is located between the two elements).

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

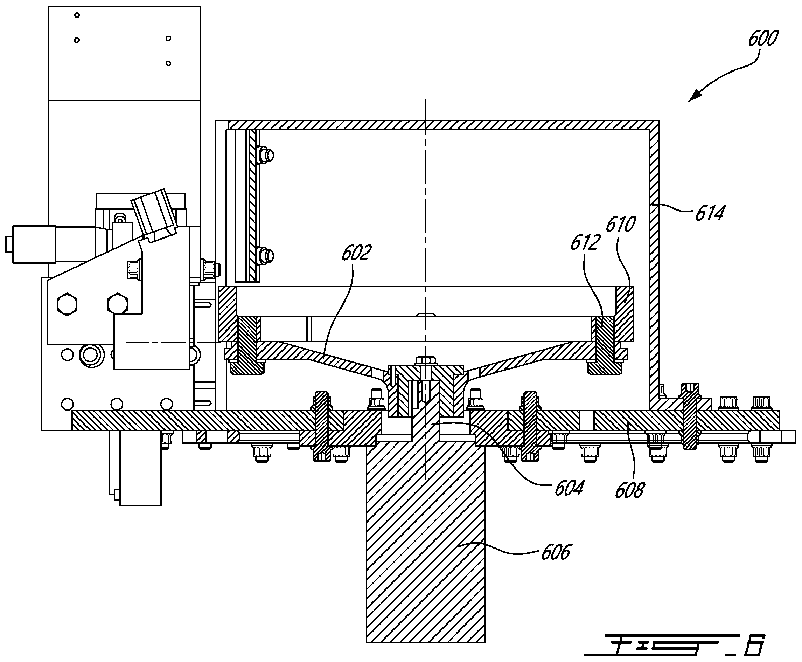

Fig. 6 presents another example embodiment of a test rig 600. In this embodiment, the test rig 600 has a ring mount 602 secured to a shaft 604 of the rotation motor 606. The rotation motor 606 having a housing secured to a frame plate 608. In this embodiment, the ring 610 is designed to be secured to the propeller system using a plurality of bolts 612, and the ring mount 602 is designed to receive the ring 610 using the same bolts 612. Accordingly, the ring 610 can be secured to the ring mount 602 using the bolts 612. A cover box 614 is used to form a partition the rotating components from the environment during operation, for protection to any surrounding operator. The sensor mount and the sensor mount movement mechanism are on the left hand side of the figure.

In this embodiment, the sensor and ring 610 interact on the basis of variations in a magnetic field. In this context, it was preferred to use non-ferromagnetic materials in the rig for any component located adjacent to the magnetic field between the sensor and ring, especially if such components are non-symmetric relative to this field, to avoid or mitigate any undesired effects on the magnetic field on the operation. Accordingly, the ring mount 602, including the bolts 612 for instance, and sensor mount can be made of non-ferromagnetic materials such as aluminum or 300 series steel (which have less than 20% the amount of ferromagnetism than ferromagnetic steels can have, for instance). It can be convenient, for instance, for the mounts to be machined of aluminum and for the bolts to be made of 300 series steel. In this embodiment, the cover 614 was found to be relatively symmetrical to the magnetic field relative to an axially extending slot formed in one of its side, and across which the sensor magnetically interacts with the ring. Due to the symmetricity of the cover relative to the magnetic field in the region where the magnetic field has a significant strength, it was found that using a ferromagnetic material for the cover did not cause any significant interference with the operation of the system based on comparisons which were made with and without the cover.

It was also found convenient in this embodiment to provide a mount which allowed to adjust the runout of the ring 610 relative to the rotation axis. In this example, this was achieved by using bolts 612 which have a smaller diameter than the diameters of the bores formed axially across the mount 602 and through which they extend. In this manner, the bolts can be released, and the ring moved in its radial plane relative to the mount to a certain extent to adjust the its concentricity relative to the rotation axis, before the bolts are re-tightened. Selecting a motor which has a shaft that rotates with a high degree of concentricity with its rotation axis can also be helpful in achieving a satisfactory accuracy.

The embodiments described in this document provide non-limiting examples of possible implementations of the present technology. For example, more or less position markers may be used on the ring, or the ring can include one or more of various types of position markers configured to be detected by one of different types of potential sensors.

## Claims

1. A test rig (321) for testing a blade pitch measurement system (200) of a variable pitch propeller system, the blade pitch measurement system (200) including a feedback device (204; 304) configured to move relative to a pitch sensor (206; 306) in a propeller axis orientation when the pitch varies, the test rig (321) comprising:
a frame (332),
a first mount (322) rotatably mounted to the frame (332) and configured to receive the feedback device (204; 304),
a rotation motor (324) drivingly coupled to the first mount (322) to rotate the first mount (322) relative to the frame (332) around a rotation axis (A),
a second mount (320) configured to receive the pitch sensor (206; 306),
a mechanism configured for moving the second mount (320) along an orientation parallel to the rotation axis (A), and
a controller (208) configured to control the rotation of the rotation motor (324) to a variable rotation speed, and for controlling the movement of the second mount (320) to variable positions via the mechanism,
**characterized in that**:
the mechanism is further configured for moving the second mount (320) radially relative to the rotation axis (A).

2. The test rig of claim 1, wherein the mechanism is configured for moving the second mount (320) relative to the frame (332).

3. The test rig of claim 1 or 2, further comprising a rotation sensor (325) configured to generate a signal indicative of a rotation speed of the first mount (322).

4. The test rig of claim 1, 2 or 3, wherein the mechanism includes an axial traverse (350) including an axial guide (327), an axial motor (326) mechanically coupled to move the second mount (320) along the axial guide (327), and an axial sensor (329) configured to generate a signal indicative of a relative displacement between the second mount (320) and the axial guide (327) or of a relative position of the second mount (320) along the axial guide (327).

5. The test rig of claim 1, wherein the mechanism includes a radial traverse (352) including a radial guide (330), a radial motor (328) mechanically coupled to move the second mount (320) along the radial guide (330), and a radial sensor (331) configured to generate a signal indicative of a relative displacement between the second mount (320) and the radial guide (330) or of a relative position of the second mount (320) along the radial guide (330).

6. The test rig of any preceding claim, wherein the controller (208) is further configured to perform a testing routine including controlling the rotation speed and position of the second mount (320) through a sequence of values associated to corresponding test conditions, and further configured to hold test data in a computer readable memory accessible to a processor of the controller (208), said test data associating each test condition to a corresponding rotation speed value and to a corresponding second mount position value, said testing routine being based on the test data.

7. The test rig of claim 6, wherein the controller (208) is further configured to hold comparison data in a computer readable memory accessible to the processor of the controller (208), said comparison data including a range of permitted values for the second mount position value associated with each test condition, further configured for receiving a measured second mount position value based on a signal generated by the pitch sensor (206; 306) during a corresponding one of the test conditions, to compare the measured second mount position value to the range of permitted values and to generate a signal indicative of rejection if the measured second mount position value exceeds the range of permitted values.

8. A method of operating a test rig (321) for testing a blade pitch measurement system (200) of a variable pitch propeller system, the method comprising:
securing a feedback device (204; 304) of the measurement system (200) to a first mount (322) of the test rig (321);
securing a pitch sensor (206; 306) of the measurement system (200) to a second mount (320) of the test rig (321);
rotating the feedback device (204; 304) via the first mount (322) around a rotation axis (A), at a given rotation speed, relative to the pitch sensor (206; 306);
moving the pitch sensor (206; 306) by moving the second mount (320) via an axial traverse (350) along an orientation parallel to the rotation axis (A); and
measuring the relative axial position between the pitch sensor (206; 306) and the feedback device (204; 304) using a signal generated by the pitch sensor (206; 306) during the rotation of the feedback device (204; 304),
**characterized by**:
moving the pitch sensor (206; 306) by moving the second mount (320) via a radial traverse (352) along an orientation radial to the rotation axis (A).

9. The method of claim 8, further comprising measuring a rotation speed of the feedback device (204; 304) using a rotation sensor (325).

10. The method of claim 8 or 9, further comprising measuring a position of the second mount (320) along the orientation parallel to the rotation axis (A) using an axial sensor (329).

11. The method of claim 8, 9 or 10, further comprising measuring a position of the second mount (320) along the orientation radial to the rotation axis (A) using a radial sensor (331).

12. The method of any of claims 8 to 11, further comprising, using a computer, reading instructions indicating a sequence of test conditions each including a rotation speed and a position of the second mount (320), controlling the test rig (321) in accordance with the sequence of test conditions, and for each test condition, receiving a corresponding signal from the pitch sensor (206; 306).

13. The method of claim 12, further comprising, for each test condition, deriving a position of the second mount (320) from the corresponding signal received from the pitch sensor (206; 306), and, optionally, for each test condition, comparing the derived position of the second mount (320) to a range of permissible values associated to the instructions, and generating a signal indicative of whether or not the derived position is within the range of permissible values.

14. The method of claim 12 or 13, further comprising, for each test condition, deriving a rotation speed of the first mount (322) from the corresponding signal received from the pitch sensor (206; 306), and, optionally, for each test condition, comparing the derived rotation speed to a range of permissible values associated to the instructions, and generating a signal indicative of whether or not the derived position is within the range of permissible values.

15. The method of claim 12, 13 or 14, wherein moving the pitch sensor (206; 306) by moving the second mount (320) via the radial traverse (352) along an orientation radial to the rotation axis (A) further comprises moving the pitch sensor (206; 306) via the second mount (320) from an initial radial position to a subsequent radial position along an orientation radial to the rotation axis (A) and repeating the controlling of the test rig (321) in accordance with the sequence of test conditions in the subsequent radial position.

## Patentansprüche

1. Prüfstand (321) zum Prüfen einer Blattsteigungsmesssystems (200) eines Propellersystems mit verstellbarer Steigung, wobei das Blattsteigungsmesssystem (200) eine Rückmeldevorrichtung (204; 304) beinhaltet, die dazu konfiguriert ist, sich in einer Propellerachsenausrichtung relativ zu einem Steigungssensor (206; 306) zu bewegen, wenn die Steigung verstellt wird, wobei der Prüfstand (321) Folgendes umfasst:
einen Rahmen (332),
eine erste Halterung (322), die drehbar an dem Rahmen (332) montiert und dazu konfiguriert ist, die Rückmeldevorrichtung (204; 304) aufzunehmen,
einen Drehmotor (324), der antriebsmäßig mit der ersten Halterung (322) gekoppelt ist, um die erste Halterung (322) relativ zu dem Rahmen (332) um eine Drehachse (A) zu drehen,
eine zweite Halterung (320), die dazu konfiguriert ist, den Steigungssensor (206; 306) aufzunehmen,
einen Mechanismus, der dazu konfiguriert ist, die zweite Halterung (320) entlang einer Ausrichtung parallel zu der Drehachse (A) zu bewegen, und
eine Steuerung (208), die dazu konfiguriert ist, die Drehung des Drehmotors (324) auf eine verstellbare Drehgeschwindigkeit zu steuern und die Bewegung der zweiten Halterung (320) über den Mechanismus in verstellbare Positionen zu steuern,
**dadurch gekennzeichnet, dass**:
der Mechanismus ferner dazu konfiguriert ist, die zweite Halterung (320) radial relativ zu der Drehachse (A) zu bewegen.

2. Prüfstand nach Anspruch 1, wobei der Mechanismus dazu konfiguriert ist, die zweite Halterung (320) relativ zu dem Rahmen (332) zu bewegen.

3. Prüfstand nach Anspruch 1 oder 2, ferner umfassend einen Drehsensor (325), der dazu konfiguriert ist, ein Signal zu erzeugen, das eine Drehgeschwindigkeit der ersten Halterung (322) angibt.

4. Prüfstand nach Anspruch 1, 2 oder 3, wobei der Mechanismus eine axiale Traverse (350) beinhaltet, die eine axiale Führung (327), einen axialen Motor (326), der mechanisch zum Bewegen der zweiten Halterung (320) entlang der axialen Führung (327) gekoppelt ist, und einen axialen Sensor (329) beinhaltet, der zum Erzeugen eines Signals konfiguriert ist, das eine relative Verschiebung zwischen der zweiten Halterung (320) und der axialen Führung (327) oder eine relative Position der zweiten Halterung (320) entlang der axialen Führung (327) angibt.

5. Prüfstand nach Anspruch 1, wobei der Mechanismus eine radiale Traverse (352) beinhaltet, die eine radiale Führung (330), einen radialen Motor (328), der mechanisch zum Bewegen der zweiten Halterung (320) entlang der radialen Führung (330) gekoppelt ist, und einen radialen Sensor (331) beinhaltet, der zum Erzeugen eines Signals konfiguriert ist, das eine relative Verschiebung zwischen der zweiten Halterung (320) und der radialen Führung (330) oder eine relative Position der zweiten Halterung (320) entlang der radialen Führung (330) angibt.

6. Prüfstand nach einem der vorhergehenden Ansprüche, wobei die Steuerung (208) ferner dazu konfiguriert ist, eine Prüfroutine durchzuführen, die Steuern der Drehgeschwindigkeit und Position der zweiten Halterung (320) durch eine Folge von Werten beinhaltet, die entsprechenden Prüfbedingungen zugeordnet sind, und ferner dazu konfiguriert ist, Prüfdaten in einem computerlesbaren Speicher zu speichern, auf den ein Prozessor der Steuerung (208) zugreifen kann, wobei die Prüfdaten jede Prüfbedingung einem entsprechenden Drehgeschwindigkeitswert und einem entsprechenden Positionswert der zweiten Halterung zuordnen, wobei die Prüfroutine auf den Prüfdaten basiert.

7. Prüfstand nach Anspruch 6, wobei die Steuerung (208) ferner dazu konfiguriert ist, Vergleichsdaten in einem computerlesbaren Speicher zu speichern, auf den der Prozessor der Steuerung (208) zugreifen kann, wobei die Vergleichsdaten einen Bereich zulässiger Werte für den Positionswert der zweiten Halterung beinhalten, der mit jeder Prüfbedingung verknüpft ist, und ferner dazu konfiguriert ist, einen gemessenen Positionswert der zweiten Halterung basierend auf einem Signal, das von dem Steigungssensor (206; 306) während einer entsprechenden der Prüfbedingungen erzeugt wird, zu empfangen, den gemessenen Positionswert der zweiten Halterung mit dem Bereich zulässiger Werte zu vergleichen und ein Signal zu erzeugen, das eine Zurückweisung angibt, wenn der gemessene Positionswert der zweiten Halterung den Bereich zulässiger Werte überschreitet.

8. Verfahren zum Betreiben eines Prüfstands (321) zum Prüfen eines Blattsteigungsmesssystems (200) eines Propellersystems mit verstellbarer Steigung, wobei das Verfahren Folgendes umfasst:
Befestigen einer Rückmeldevorrichtung (204; 304) des Messsystems (200) an einer ersten Halterung (322) des Prüfstands (321);
Befestigen eines Steigungssensors (206; 306) des Messsystems (200) an einer zweiten Halterung (320) des Prüfstands (321);
Drehen der Rückmeldevorrichtung (204; 304) über die erste Halterung (322) um eine Drehachse (A) mit einer gegebenen Drehgeschwindigkeit relativ zu dem Steigungssensor (206; 306);
Bewegen des Steigungssensors (206; 306) durch Bewegen der zweiten Halterung (320) über eine axiale Traverse (350) entlang einer Ausrichtung parallel zu der Drehachse (A); und
Messen der relativen axialen Position zwischen dem Steigungssensor (206; 306) und der Rückmeldevorrichtung (204; 304) unter Verwendung eines Signals, das von dem Steigungssensor (206; 306) während der Drehung der Rückmeldevorrichtung (204; 304) erzeugt wird,
**gekennzeichnet durch**:
Bewegen des Steigungssensors (206; 306) durch Bewegen der zweiten Halterung (320) über eine radiale Traverse (352) entlang einer Ausrichtung radial zu der Drehachse (A).

9. Verfahren nach Anspruch 8, ferner umfassend Messen einer Drehgeschwindigkeit der Rückmeldevorrichtung (204; 304) unter Verwendung eines Drehsensors (325).

10. Verfahren nach Anspruch 8 oder 9, ferner umfassend Messen einer Position der zweiten Halterung (320) entlang der Ausrichtung parallel zu der Drehachse (A) unter Verwendung eines axialen Sensors (329).

11. Verfahren nach Anspruch 8, 9 oder 10, ferner umfassend Messen einer Position der zweiten Halterung (320) entlang der Ausrichtung radial zu der Drehachse (A) unter Verwendung eines radialen Sensors (331).

12. Verfahren nach einem der Ansprüche 8 bis 11, ferner umfassend Lesen von Anweisungen unter Verwendung eines Computers, die eine Folge von Prüfbedingungen angeben, die jeweils eine Drehgeschwindigkeit und eine Position der zweiten Halterung (320) beinhalten, Steuern des Prüfstands (321) gemäß der Folge von Prüfbedingungen und Empfangen eines entsprechenden Signals von dem Steigungssensor (206; 306) für jede Prüfbedingung.

13. Verfahren nach Anspruch 12, ferner umfassend Ableiten einer Position der zweiten Halterung (320) für jede Prüfbedingung aus dem entsprechenden Signal, das von dem Steigungssensor (206; 306) empfangen wird, und optional Vergleichen der abgeleiteten Position der zweiten Halterung (320) für jede Prüfbedingung mit einem Bereich zulässiger Werte, die den Anweisungen zugeordnet sind, und Erzeugen eines Signals, das angibt, ob die abgeleitete Position innerhalb des Bereichs zulässiger Werte liegt oder nicht.

14. Verfahren nach Anspruch 12 oder 13, ferner umfassend Ableiten einer Drehgeschwindigkeit der ersten Halterung (322) für jede Prüfbedingung aus dem entsprechenden Signal, das von dem Steigungssensor (206; 306) empfangen wird, und optional Vergleichen der Drehgeschwindigkeit für jede Prüfbedingung mit einem Bereich zulässiger Werte, die den Anweisungen zugeordnet sind, und Erzeugen eines Signals, das angibt, ob die abgeleitete Position innerhalb des Bereichs zulässiger Werte liegt oder nicht.

15. Verfahren nach Anspruch 12, 13 oder 14, wobei das Bewegen des Steigungssensors (206; 306) durch Bewegen der zweiten Halterung (320) über die radiale Traverse (352) entlang einer Ausrichtung radial zu der Drehachse (A) ferner Bewegen des Steigungssensors (206; 306) über die zweite Halterung (320) von einer anfänglichen radialen Position zu einer nachfolgenden radialen Position entlang einer Ausrichtung radial zu der Drehachse (A) und Wiederholen des Steuerns des Prüfstands (321) gemäß der Folge von Prüfbedingungen in der nachfolgenden radialen Position umfasst.

## Revendications

1. Banc d'essai (321) permettant de tester un système de mesure de pas de pale (200) d'un système d'hélice à pas variable, le système de mesure de pas de pale (200) comportant un dispositif de rétroaction (204 ; 304) configuré pour se déplacer par rapport à un capteur de pas (206 ; 306) dans une orientation d'axe d'hélice lorsque le pas varie, le banc d'essai (321) comprenant :
un cadre (332),
un premier support (322) monté rotatif sur le cadre (332) et configuré pour recevoir le dispositif de rétroaction (204 ; 304),
un moteur de rotation (324) accouplé par entraînement au premier support (322) pour faire tourner le premier support (322) par rapport au cadre (332) autour d'un axe de rotation (A),
un second support (320) configuré pour recevoir le capteur de pas (206 ; 306),
un mécanisme configuré pour déplacer le second support (320) le long d'une orientation parallèle à l'axe de rotation (A), et un dispositif de commande (208) configuré pour commander la rotation du moteur de rotation (324) à une vitesse de rotation variable, et pour commander le mouvement du second support (320) vers des positions variables par l'intermédiaire du mécanisme, **caractérisé en ce que** :
le mécanisme est également configuré pour déplacer le second support (320) radialement par rapport à l'axe de rotation (A).

2. Banc d'essai selon la revendication 1, dans lequel le mécanisme est configuré pour déplacer le second support (320) par rapport au cadre (332).

3. Banc d'essai selon la revendication 1 ou 2, comprenant également un capteur de rotation (325) configuré pour générer un signal indiquant une vitesse de rotation du premier support (322).

4. Banc d'essai selon la revendication 1, 2 ou 3, dans lequel le mécanisme comporte une traverse axiale (350) comportant un guide axial (327), un moteur axial (326) accouplé mécaniquement pour déplacer le second support (320) le long du guide axial (327), et un capteur axial (329) configuré pour générer un signal indiquant un déplacement relatif entre le second support (320) et le guide axial (327) ou une position relative du second support (320) le long du guide axial (327).

5. Banc d'essai selon la revendication 1, dans lequel le mécanisme comporte une traverse radiale (352) comportant un guide radial (330), un moteur radial (328) accouplé mécaniquement pour déplacer le second support (320) le long du guide radial (330), et un capteur radial (331) configuré pour générer un signal indiquant un déplacement relatif entre le second support (320) et le guide radial (330) ou une position relative du second support (320) le long du guide radial (330).

6. Banc d'essai selon l'une quelconque revendication précédente, dans lequel le dispositif de commande (208) est également configuré pour réaliser une routine d'essai comportant la commande de la vitesse de rotation et de la position du second support (320) par une séquence de valeurs associées à des conditions d'essai correspondantes, et également configuré pour conserver des données d'essai dans une mémoire lisible par ordinateur accessible à un processeur du dispositif de commande (208), lesdites données d'essai associant chaque condition d'essai à une valeur de vitesse de rotation correspondante et à une valeur de position de second support correspondante, ladite routine d'essai étant basée sur les données d'essai.

7. Banc d'essai selon la revendication 6, dans lequel le dispositif de commande (208) est également configuré pour conserver des données de comparaison dans une mémoire lisible par ordinateur accessible au processeur du dispositif de commande (208), lesdites données de comparaison comportant une plage de valeurs autorisées pour la valeur de position de second support associée à chaque condition d'essai, également configuré pour recevoir une valeur de position de second support mesurée sur la base d'un signal généré par le capteur de pas (206 ; 306) pendant une condition correspondante des conditions d'essai, pour comparer la valeur de position de second support mesurée à la plage de valeurs autorisées et pour générer un signal indiquant un rejet si la valeur de position de second support mesurée dépasse la plage de valeurs autorisées.

8. Procédé de fonctionnement d'un banc d'essai (321) pour tester un système de mesure de pas de pale (200) d'un système d'hélice à pas variable, le procédé comprenant :
la fixation d'un dispositif de rétroaction (204 ; 304) du système de mesure (200) à un premier support (322) du banc d'essai (321) ;
la fixation d'un capteur de pas (206 ; 306) du système de mesure (200) à un second support (320) du banc d'essai (321) ;
la rotation du dispositif de rétroaction (204 ; 304) par l'intermédiaire du premier support (322) autour d'un axe de rotation (A), à une vitesse de rotation donnée, par rapport au capteur de pas (206 ; 306) ;
le déplacement du capteur de pas (206 ; 306) par déplacement du second support (320) par l'intermédiaire d'une traverse axiale (350) le long d'une orientation parallèle à l'axe de rotation (A) ; et
la mesure de la position axiale relative entre le capteur de pas (206 ; 306) et le dispositif de rétroaction (204 ; 304) à l'aide d'un signal généré par le capteur de pas (206 ; 306) pendant la rotation du dispositif de rétroaction (204 ; 304),
**caractérisé par** :
le déplacement du capteur de pas (206 ; 306) par déplacement du second support (320) par l'intermédiaire d'une traverse radiale (352) le long d'une orientation radiale à l'axe de rotation (A).

9. Procédé selon la revendication 8, comprenant également la mesure d'une vitesse de rotation du dispositif de rétroaction (204 ; 304) à l'aide d'un capteur de rotation (325).

10. Procédé selon la revendication 8 ou 9, comprenant également la mesure d'une position du second support (320) le long de l'orientation parallèle à l'axe de rotation (A) à l'aide d'un capteur axial (329).

11. Procédé selon la revendication 8, 9 ou 10, comprenant également la mesure d'une position du second support (320) le long de l'orientation radiale à l'axe de rotation (A) à l'aide d'un capteur radial (331).

12. Procédé selon l'une quelconque des revendications 8 à 11, comprenant également, à l'aide d'un ordinateur, la lecture d'instructions indiquant une séquence de conditions d'essai comportant chacune une vitesse de rotation et une position du second support (320), la commande du banc d'essai (321) conformément à la séquence de conditions d'essai, et pour chaque condition d'essai, la réception d'un signal correspondant provenant du capteur de pas (206 ; 306).

13. Procédé selon la revendication 12, comprenant également, pour chaque condition d'essai, la dérivation d'une position du second support (320) à partir du signal correspondant reçu du capteur de pas (206 ; 306), et, éventuellement, pour chaque condition d'essai, la comparaison de la position dérivée du second support (320) à une plage de valeurs admissibles associées aux instructions, et la génération d'un signal indiquant si la position dérivée se situe ou non au sein de la plage de valeurs admissibles.

14. Procédé selon la revendication 12 ou 13, comprenant également, pour chaque condition d'essai, la dérivation d'une vitesse de rotation du premier support (322) à partir du signal correspondant reçu du capteur de pas (206 ; 306), et, éventuellement, pour chaque condition d'essai, la comparaison de la vitesse de rotation dérivée à une plage de valeurs admissibles associées aux instructions, et la génération d'un signal indiquant si la position dérivée se situe ou non au sein de la plage de valeurs admissibles.

15. Procédé selon la revendication 12, 13 ou 14, dans lequel le déplacement du capteur de pas (206 ; 306) par déplacement du second support (320) par l'intermédiaire de la traverse radiale (352) le long d'une orientation radiale à l'axe de rotation (A) comprend également le déplacement du capteur de pas (206 ; 306) par l'intermédiaire du second support (320) d'une position radiale initiale à une position radiale ultérieure le long d'une orientation radiale à l'axe de rotation (A) et la répétition de la commande du banc d'essai (321) conformément à la séquence de conditions d'essai dans la position radiale ultérieure.
